Europäisches Patentamt

European Patent Office

Office européen des brevets

(11) Veröffentlichungsnummer: **0 319 866**

**A2**

(12) **EUROPÄISCHE PATENTANMELDUNG**

(21) Anmeldenummer: **88120199.0**

(22) Anmeldetag: **03.12.88**

(51) Int. Cl.4: **C08G 18/14 , C08G 18/30 , C08J 9/08 , C08K 3/34**

(30) Priorität: **11.12.87 DE 3742122**

(43) Veröffentlichungstag der Anmeldung:
**14.06.89 Patentblatt 89/24**

(84) Benannte Vertragsstaaten:
**AT BE CH DE FR GB IT LI NL SE**

(71) Anmelder: **BAYER AG**

**D-5090 Leverkusen 1 Bayerwerk(DE)**

(72) Erfinder: **Neuhaus, Alfred**
**Habichtgasse 2**
**D-5090 Leverkusen 1(DE)**
Erfinder: **Ganster, Otto, Dr.**
**Droste-Huelshoff-Strasse 5**
**D-5068 Odenthal(DE)**
Erfinder: **Mengel, Manfred, Dr.**
**Bergstrasse 54 a**
**D-5068 Odenthal-Gloebusch(DE)**

(54) **Verfahren zur Herstellung von Polyurethanschaumstoff-Formteilen.**

(57) Ein Verfahren zur Herstellung von Fluorkohlenwasserstoff-freien harten Polyurethanschaumstoff-Formteilen mit einer Rohdichte von mindestens 300 kg/m³ durch Formversäumung eines üblichen, zu Polyurethanen ausreagierenden Reaktionsgemisches, wobei man als Treibmittel Wasser und/oder Kohlendioxid in Kombination mit zeolithischen Adsorbentien mit einem Durchmesser der Porenöffnung zu den Adsorptionshohlräumen von mindestens 0,7 nm verwendet.

EP 0 319 866 A2

## Verfahren zur Herstellung von Polyurethanschaumstoff-Formteilen

Die Erfindung betrifft ein neues Verfahren zur Herstellung von Fluorchlorkohlenwasserstoff-freien, harten Polyurethanschaumstoff-Formteilen einer hohen Oberflächenhärte und einer bei mindestens 300 kg/m³ liegenden Rohdichte, wobei als Treibmittel Wasser und/oder Kohlendioxid in Kombination mit speziellen Zeolithen verwendet werden.

Die Herstellung von harten Polyurethanschaumstoff-Formteilen ist beispielsweise in der DE-AS 1 694 138 beschrieben. Es handelt sich bei diesen Formkörpern um solche mit einer dichten Außenhaut und einer über dem Querschnitt des Formteils hinweg differentiellen Dichteverteilung. Derartige Schaumstoffe werden heute allgemein als "Integralschaumstoffe" bezeichnet.

Wesentlich für die Erzeugung dieser "Integralstruktur" ist die Verwendung niedrigsiedender Lösungsmittel als Treibmittel; ganz besonders geeignete Lösungsmittel sind hierfür die Chlor-Fluorkohlenwasserstoff (CFKW) R 11 und R 113.

Die Bedeutung dieser Treibmittel für die Integralstruktur wird dadurch unterstrichen, daß Verschäumungsrezepturen, die ganz oder auch nur teilweise mit dem durch die Reaktion von $H_2O$ mit Isocyanat erzeugten $CO_2$ als Treibmittel arbeiten, nicht zur Ausbildung dieser besonderen Schaumstoff-Struktur in der Lage sind, denn selbst kleine Wassermengen geben bereite eine mit feinen Zellen durchsetzte Haut. Das hat zur Folge, daß die Oberflächenhärte (Shore A, D) solcher Schaumstoff-Formteile erheblich niedriger liegt, als die vergleichbar aufgebauter, mit den Treibmittel R 11 oder R 113 hergestellter Integralschaumstoffe.

Bei vielen Anwendungen in der Praxis spielt die Oberflächenhärte aber eine entscheidende Rolle. So ist beispielsweise bei der Herstellung von Formteilen für Monitorgehäuse oder Schaltschränke eine Oberflächenhärte von mindestens 70 Shore D unverzichtbar, da die Formteile kratzfest sein müssen. Bislang konnte bei einer üblichen Dichte von 600 kg/m³ diese Härte mit den üblichen Formulierungen jedoch nur dann erreicht werden, wenn niedrigsiedende Fluorchlorkohlenwasserstoffe als Treibmittel verwendet werden.

Die der Erfindung zugrundeliegende Aufgabe bestand darin, ein neues Verfahren zur Herstellung von harten Polyurethanschaumstoff-Formteilen mit einer geschlossenen Oberflächenschicht hoher Härte zur Verfügung zu stellen, welche nicht auf die Mitverwendung von Fluorchlorkohlenwasserstoffen als Treibmittel angewiesen ist.

Überraschenderweise konnte diese Aufgabe dadurch gelöst werden, daß man als Treibmittel Wasser und/oder Kohlendioxid in Kombination mit ausgewählten zeolithischen Adsorbentien als Treibmittel und gleichzeitig ausgewählte Polyhydroxylverbindungen als wesentliche Reaktionspartner für die Polyisocyanat-Komponente verwendet.

Die Herstellung von Polyurethanschaumstoffen mit kompakter Oberfläche und zellförmigem Kern unter Mitverwendung von Alkali-Aluminium-Silikaten mit Zeolithstruktur ist bereits aus der DE-OS 1 804 362 bekannt. Bei den Schaumstoffen dieser Vorveröffentlichung handelt es sich jedoch um Leichtschaumstoffe einer bei ca. 80 bis 120 kg/m liegenden Rohdichte, wobei das Hauptanliegen der Autoren dieser Vorveröffentlichung darin bestand, trotz der Mitverwendung von Fluorchlorkohlenwasserstoffen nicht schrumpfende Schaumstoffe herzustellen. Dementsprechend wurden auch in allen Ausführungsbeispielen derartige Treibmittel mitverwendet, obwohl der Anspruch 1 der Vorveröffentlichung auch Wasser als alleiniges Treibmittel erwähnt. Dies kann jedoch das nachstehend näher beschriebene erfindungsgemäße Verfahren nicht nahelegen, da die erfindungsgemäße Aufgabe (hohe Oberflächenhärte trotz Verzicht auf die Mitverwendung von Fluorchlorkohlenwasserstoffen) in der Vorveröffentlichung ebensowenig angesprochen wird wie der erfindungsgemäße Lösungsvorschlag, demzufolge insbesondere Wasser in Kombination mit ausgewählten Zeolithen zur Herstellung von Polyurethanschaumstoff-Formteilen einer vergleichsweise hohen Dichte und einer hohen Oberflächenhärte eingesetzt werden.

Gegenstand der Erfindung ist ein Verfahren zur Herstellung von Fluorkohlenwasserstoff-freien, harten Polyurethanschaumstoff-Formteilen einer Rohdichte von mindestens 300 kg/m³ durch Formverschäumung eines Reaktionsgemisches aus

a) einer Polyisocyanatkomponente, bestehend aus mindestens einem aromatischen Polyisocyanat,

b) einer Polyhydroxyl-Komponente,

c) Treibmitteln,

d) Katalysatoren und

e) weiteren Hilfs- und Zusatzmitteln

unter Einhaltung einer Isocyanatkennzahl von 75 bis 150, dadurch gekennzeichnet, daß man

2

b) als Polyhydroxyl-Komponente eine organische Polyhydroxylverbindung oder ein Gemisch organischer Polyhydroxylverbindungen mit einer (mittleren) Hydroxylfunktionalität von mindestens 2,2 und einer (mittleren) Hydroxylzahl von mindestens 300 mg KOH/g,

c) als Treibmittel Wasser und/oder Kohlendioxid und

e) als Zusatzmittel zeolithische Absorbentien mit einem Durchmesser der Porenöffnung zu den Absorptionshohlräumen von mindestens 0,7 nm, gegebenenfalls neben weiteren Hilfs- und Zusatzmitteln verwendet.

Als Polyisocyanat-Komponente a) kommen beliebige aromatische Polyisocyanate mit einem NCO-Gehalt von mindestens 20 Gew.-% in Betracht. Ganz besonders bevorzugt werden die bekannten Polyisocyanatgemische der Diphenylmethanreihe verwendet, wie sie beispielsweise durch Phosgenierung von Anilin/Formaldehyd-Kondensaten zugänglich sind. Diese für das erfindungsgemäße Verfahren besonders gut geeigneten Polyisocyanatgemische weisen im allgemeinen einen Gehalt an Diisocyanatodiphenylmethan-Isomeren von 50 bis 100 Gew.-% auf und bestehen im wesentlichen zum Rest aus höherfunktionellen Homologen dieser Diisocyanate. Die in diesen Gemischen vorliegenden Diisocyanate bestehen im wesentlichen aus 4,4'-Diisocyanatodiphenylmethan in Abmischung mit bis zu 60 Gew.-%, bezogen auf die Gesamtmenge der Diisocyanate, an 2,4'-Diisocyanatodiphenylmethan und gegebenenfalls geringen Mengen an 2,2'-Diisocyanatodiphenylmethan. Auch Urethan-, Carbodiimid- oder Allophanat-modifizierte Derivate dieser Polyisocyanate können als Polyisocyanatkomponente a) eingesetzt werden.

Bei der Polyhydroxykomponente b) handelt es sich um mindestens eine organische Polyhydroxylverbindung, vorzugsweise um ein Gemisch mehrerer organischer Polyhydroxylverbindungen, wobei die Komponente b) eine (mittlere) Hydroxylfunktionalität von mindestens 2,2, vorzugsweise mindestens 2,7 und eine (mittlere) Hydroxylzahl von mindestens 300 mg KOH/g, vorzugsweise mindestens 400 mg KOH/g aufweist. Bei den einzelnen Bestandteilen der Polyhydroxylkomponente b) handelt es sich insbesondere um an sich bekannte Polyetherpolyole, wie sie durch Alkoxylierung von geeigneten Startermolekülen erhalten werden können. Geeignete Startermoleküle sind beispielsweise Wasser, Propylenglykol, Glycerin, Trimethylolpropan, Rohrzucker bzw. Abmischungen derartiger Startermoleküle. Geeignete Alkoxylierungsmittel sind insbesondere Propylenoxid und gegebenenfalls Ethylenoxid, welches im Gemisch mit Propylenoxid oder auch separat in getrennten Reaktionsschritten während der Alkoxylierungsreaktion zur Anwendung gelangen kann.

Die Polyhydroxylkomponente b) kann außer derartigen Polyetherpolyolen auch einfache Alkanpolyole wie Ethylenglykol, Propylenglykol, Trimethylolpropan und/oder Glycerin als Abmischkomponente enthalten. Auch die üblichen Polyesterpolyole des Standes der Technik können Bestandteil der Komponente b) sein, sofern diese den obengenannten Bedingungen entspricht.

Die Polyolkomponente b) wird oftmals in mit Luft beladener Form verwendet. Üblich ist eine Luftbeladung von bis zu 35 Volumen-%, bezogen auf den atomsphärischen Druck.

Als Treibmittel c) Wasser und/oder Kohlendioxid verwendet. Falls Wasser als alleiniges Treibmittel verwendet wird, liegt die Gesamtmenge des in das Reaktionsgemisch eingebrachten Wassers, inklusive dem an die zeolithischen Adsorbentien gebundenen Wasser bei mindestens 0,5 Gew.-%, vorzugsweise 1,0 bis 2,0 Gew.-%, bezogen auf das Gewicht der Komponente b). Das Wasser kann dem Reaktionsgemisch als solches oder auch in Form von wasserhaltigem Zeolith einverleibt werden. Im Falle der (Mit)-Verwendung von Kohlendioxid als Treibmittel wird dieses Gas vorzugsweise in die Polyolkomponente b), die den trockenen Zeolith in feindispergierter Form enthält, unter Rühren in feiner Verteilung eingeleitet. Dabei wird es rasch vom dispergierten Zeolith aufgenommen. Das $CO_2$ kann auch vorher an das trockene pulverisierte zeolithische Adsorbens adsorbiert werden und in dieser Form der Polyolkomponente zugegeben werden. Unter "trockenem Zeolith" ist dabei das bei erhöhter Temperatur, beispielsweise bei 400°C getrocknete Produkt, das noch bis max. 2 Gew.-% Wasser enthalten kann, zu verstehen. Dieses im Zeolith gegebenenfalls noch vorliegende Restwasser ist normalerweise der Isocyanat-Additionsreaktion nicht mehr zugänglich. Bei der Berechnung der Isocyanat-Kennzahl wird jedoch auch dieses Restwasser mit berücksichtigt. Im Falle der alleinigen Verwendung von Kohlendioxid als Treibmittel (hierunter ist eine Arbeitsweise zu verstehen, gemäß welcher im Reaktionsgemisch insge samt maximal 2 Gew.-% Wasser, bezogen auf das Gewicht des absolut wasserfreien Zeoliths, vorliegen) wird dieses in Mengen von mindestens 1,2 Gew.-%, vorzugsweise 2,4 bis 5,0 Gew.-%, bezogen auf das Gewicht der Komponente b) verwendet. Im Falle der im Rahmen der Erfindung weniger bevorzugten gleichzeitigen Verwendung von Wasser und Kohlendioxid muß die Gesamtmenge dieser Treibmittel so gewählt werden, daß ein einwandfreies Ausschäumen der Form gewährleistet ist. Im allgemeinen liegt die Gesamtmenge an Kohlendioxid plus Wasser bei dieser Ausführungsform bei 1,0 bix 2,5 Gew.-%, bezogen auf das Gewicht der Komponente b).

Bei den Katalysatoren d) handelt es sich vor allem um die bekannten, die Isocyanat-Polyadditionsreaktion beschleunigenden tert. Amine wie Triethylendiamin, N,N-Dimethylanilin oder N,N-Dimethylcyclohexyla-

3

min bzw. metallorganische Verbindungen, insbesondere Zinnverbindungen wie Zinn(II)-octoat oder Dibutylzinndilaurat. Auch Trimerisierungskatalysatoren wie beispielsweise Alkaliacetate wie Natrium- oder Kaliumacetat, Alkaliphenolate, wie Natriumphenolat oder Natriumtrichlorphenolat oder 2,4,6-Tris-(dimethylaminomethyl)-phenol oder auch Bleinaphthenat, Bleibenzoat oder Bleioctoat können erfindungsgemäß zum Einsatz gelangen, falls an die Herstellung von Isocyanuratgruppen aufweisenden Polyurethanschaumstoffen gedacht ist.

Erfindungswesentliches Hilfsmittel e) sind zeolithische Adsorbentien, d.h. Alkalialumosilikate oder Alkali-Erd-alkali-Alumosilikate mit einem Durchmesser der Poren öffnung von mindestens 0,7 nm. Besonders gut geeignet sind synthetische Zeolithe, die diesen Bedingungen entsprechen (vgl. Ullmanns Enzyklopädie der technischen Chemie, 4. Auflage, Band 17, Seiten 9-18, Verlag Chemie, Weinheim/New York).

Die zeolithischen Adsorbentien werden im allgemeinen in Form von Pulvern mit einem maximalen Teilchendurchmesser von 100 μm, vorzugsweise ≤10 μm verwendet.

Für das erfindungsgemäße Verfahren besonders gut geeignet sind synthetische Zeolithe vom Faujasit-Typ mit der allgemeinen Formel

$(M^I, M^{II}_{1/2})_2O \cdot Al_2O_3 \cdot y \, SiO_2 \cdot z \, H_2O$

in welcher

$M^I$ für Natrium - oder Kaliumkationen stehen,

$M^{II}$ für Calcium- oder Magnesiumkationen stehen,

y einen Wert von 2 bis 6 einnehmen kann, wobei synthetische Zeolithe vom Typ X einen y-Wert von 2 bis 3, solche vom Typ Y einen y-Wert von 3 bis 6 aufweisen können, und

z für 0 oder eine Zahl bis 5,5 (Typ X) bzw. für 0 oder eine Zahl bis 8 (Typ Y) steht.

Besonders gut geeignet ist ein Zeolith X wie er z.B. unter der Bezeichnung ®Baylith W von der Bayer AG, Leverkusen, vertrieben wird.

Bei der Durchführung des erfindungsgemäßen Verfahrens werden die zeolithischen Adsorbentien (berechnet als wasserfreies Zeolith) im allgemeinen in Mengen von 2,5 bis 50, vorzugsweise 5 bis 25 Gew.-%, bezogen auf das Gewicht der Komponente b) eingesetzt. Im falle der alleinigen Verwendung von Wasser als Treibmittel werden die Zeolithe (berechnet als wasserfreier Zeolith) im allgemeinen in einer solchen Menge verwendet, daß das in das Reaktionsgemisch eingebrachte Wasser inklusive dem im Zeolith vorliegenden Wasser, 5 - 25, vorzugsweise 10 - 25 Gew.-% des Zeolith-Anteils ausmacht. Der Begriff "wasserfreier Zeolith" bedeutet ein zeolithisches Material mit einem Wassergehalt von 0 %. Der oftmals benutzte Begriff "trockener Zeolith" bedeutet ein zeolithisches Material mit einem Wassergehalt von max 2 Gew.-%.

Neben den zeolithischen Adsorbentien können beim erfindungsgemäßen Verfahren auch weitere Hilfs- und Zusatzmittel mitverwendet werden. Hierzu gehören beispielsweise Schaumstabilisatoren, beispielsweise solche auf Basis von Polyether-modifizierten Polysiloxanen, Flammschutzmittel, innere Formtrennmittel u. dgl.

Zur Durchführung des erfindungsgemäßen Verfahrens wird im allgemeinen so vorgegangen, daß Ausgangskomponenten b) bis e) vorab miteinander vermischt und anschließend mit der Polyisocyanatkomponente a) vereinigt werden. Die letztgenannte Durchmischung erfolgt beispielsweise unter Verwendung von Rührwerksmischern oder vorzugsweise unter Verwendung der üblichen Hochdruck-Mischaggregate, wie sie üblicherweise zur Herstellung von Polyurethanschaumstoffen verwendet werden. Unmittelbar nach der Herstellung des Reaktionsgemischs erfolgt die Befüllung der Form, wobei die Menge des in die Form eingetragenen Reaktionsgemischs so gewählt wird, daß eine Rohdichte von mindestens 300 kg/m³, vorzugsweise 500 bis 750 kg/m³ resultiert. Im allgemeinen beträgt die Temperatur der zur Anwendung gelangenden Formwerkzeuge mindestens 30°C, vorzugsweise mindestens 50°C. Die Innenwände der Werkzeuge können erforderlichenfalls vor der Befüllung mit an sich bekannten äußeren Formtrennmitteln beschichtet werden.

Das erfindungsgemäße Verfahren gestattet auch ohne Mitverwendung der bislang stets eingesetzten Fluorchlorkohlenwasserstoffe die Herstellung von hochwertigen, harten Polyurethanschaumstoff-Formteilen einer kompakten Oberfläche hoher Härte.

Beispiele

Ausgangsmaterialien:

EP 0 319 866 A2

Komponente a):

Polyisocyanatgemisch der Diphenylmethanreihe mit einem NCO-Gehalt von 31 Gew.-% und einem Gehalt an isomeren Diisocyanatodiphenylmethanen von 60 Gew.-%, davon 55 Gew.-% 4,4'- und ca. 5 Gew.-% 2-4'-Diisocyanatodiphenylmethan.

Polyolkomponente b1):

Propoxylierungsprodukt von Trimethylolpropan der OH-Zahl 860.

Polyolkomponente b2):

Propoxylierungsprodukt von Trimethylolpropan der OH-Zahl 56.

Katalysator d):

N,N-Dimethylcyclohexylamin

Hilfsmittel e1):

Handelsüblicher Molekularsieb-Zeolith (®Baylith W, Hersteller: Bayer AG) mit einem Porendurchmesser von 0,74 nm, pulverförmig, maximaler Teilchendurchmesser ca. 10 μm, Wassergehalt: 2 Gew.-%, gemessen als Glüverlust bei 800° C.

Hilfsmittel e2):

Handelsüblicher Molekularsieb-Zeolith (®Baylith W, Hersteller: Bayer AG) mit einem Porendurchmesser von 0,74 nm, pulverförmig, maximaler Teilchendurchmesser ca. 10 nm, mit einem Wassergehalt von 20 Gew.-%, gemessen als Glüverlust bei 800° C.

Hilfsmittel e3):

Ein trockener handelsüblicher Molekularsieb-Zeolith (®Baylith W, Hersteller Bayer AG) mit einem Porendurchmesser von 0,74 nm wird als Pulver mit einem Teilchendurchmesser von ca. 10 nm bei atomosphärischem Druck mit $CO_2$ beaufschlagt. Dabei wird $CO_2$ unter Wärmeentwicklung adsorbiert. Dieser Vorgang wird bis zur Gewichtskonstanz des Pulvers fortgeführt. Es enthält dann ca. 20 Gew.-% $CO_2$. Unter "trockenem Zeolith" ist hier ein bei 400° C getrocknetes Produkt zu verstehen. Es enthält noch ca. 2 % Wasser, welches aber nicht der normalen Umsetzung mit Isocyanat zugänglich ist.

Zusatzmittel e4):

Handelsübliches Polyethersiloxan (®Tegostab OS 50, Hersteller: Goldschmidt AG, 4300 Essen 1).

Aus den obengenannten Ausgangsmaterialien b), d) und e) wurden durch Abmischung bei Raumtemperatur unter Mitverwendung von Wasser, Kohlendioxidgas bzw. von Monofluortrichlormethan die in nachstehender Tabelle 1 mitgeteilten "Polyolmischungen" hergestellt. Die angegebenen Wassermengen beziehen sich auf das zusätzlich hinzugefügte Wasser und umfassen nicht die im Zeolith vorliegende Wassermenge. Die angegebenen Mengen Zeolith beziehen sich auf den Zeolith inklusive im Zeolith vorliegenden Wasser. Das in Beispiel 6) verwendete $CO_2$-Gas wurde zudosiert, indem die den pulverförmigen, trockenen Zeolith enthaltende Polyolmischung in einem geschlossenen Rührbehälter vorgelegt und unter Rühren Kohlendioxid eingeleitet wurde. Die Menge des eingeleiteten Gases wurde durch den Gewichtsverlust der

5

Kohlendioxid-Bombe bestimmt.

Die in der Tabelle 1 angegebenen Polyolmischungen werden mit der ebenfalls in Tabelle 1 angegebenen Menge der Polyisocyanatkomponente a) verarbeitet.

Tabelle 1

| (alle Zahlen beziehen sich auf Gewichtsteile) | | | | | | |
|---|---|---|---|---|---|---|
| Komponente | Beispiel | | | | | |
| | 1 | 2 | 3 | 4 | 5 | 6 |
| b1) | 55 | 55 | 55 | 55 | 55 | 55 |
| b2) | 36,8 | 36,8 | 36,8 | 36,8 | 36,8 | 36,8 |
| Wasser | 1,2 | - | 0,8 | - | - | |
| $CO_2$ | - | - | - | - | - | 2,9 |
| $CFCl_3$ | - | - | - | 6 | - | - |
| d) | 1 | 1 | 1 | 1 | 1 | 1 |
| e1) | 6 | - | - | - | - | 12 |
| e2) | - | 7,2 | - | - | - | - |
| e3) | - | - | - | - | 15 | - |
| e4) | 1 | 1 | 1 | 1 | 1 | 1 |
| a) | 150 | 150 | 145 | 133 | 133 | 133 |
| NCO-Kennzahl | 110 | 110 | 110 | 110 | 110 | 110 |

Allgemeine Anmerkungen zu den Ausführungsbeispielen:

Unter Verwendung der in Tabelle 1 mitgeteilten Rezepturen wurden plattenförmige Schaumstoff-Formkörper der Rohdichte 400 bis 700 kg/m³ hergestellt (vgl. Tabelle 2). Als Formwerkzeug diente eine Plattenform der Abmessung 10 x 200 x 200 mm, deren Innenwände mit einem handelsüblichen äußeren Formtrennmittel auf Wachsbasis (®Acmosil 180, Hersteller: Acmos, D-2800 Bremen 1) beschichtet worden waren. Vor der Verarbeitung wurden die Polyolmischungen durch kurzzeitiges hochtouriges Rühren (20 Minuten, 1000 UpM, Propellerrührer) mit 10 Vol.-%, bezogen auf Atmosphärendruck, feindisperser Luft beladen.

Die Herstellung der Reaktionsgemische aus den Polyolmischungen und der Polyisocyanatkomponente a) erfolgte unter Verwendung einer üblichen Rührwerkmischvorrichtung. Die Dichte der jeweiligen Formkörper wurde durch die Menge des jeweils in die Form eingetragenen Reaktionsgemischs bestimmt.

Beispiele 1 und 2: Erfindungsgemäße Beispiele unter Verwendung von Wasser und zeolithischem Adsorbens.

Beispiel 3: Vergleichsbeispiel ohne Mitverwendung eines zeolithischen Adsorbens.

Beispiel 4: Vergleichsbeispiel unter Verwendung von Monofluortrichlormethan (klassischer Integralschaumstoff hoher Härte).

Beispiel 5: Erfindungsgemäßes Beispiel unter Verwendung von Kohlendioxid-Addukt an das zeolithische Adsorbens. (Das Kohlendioxid wurde vor. Herstellung der Mischung am Zeolith adsorbiert.

Beispiel 6: Erfindungsgemäßes Beispiel, Kohlendioxid ist das wesentliche Treibmittel und wird zusammen mit zeolithischem Adsorbens verwendet.

In der nachstehenden Tabelle 2 wird die Oberflächenhärte Shore D für die einzelnen Schaumstoff-Formkörper mitgeteilt:

Tabelle 2

| Rohdichte (kg/m³) | Beispiele | | | | | |
|---|---|---|---|---|---|---|
| | 1 | 2 | 3 | 4 | 5 | 6 |
| 400 | 56 | 55 | 50 | 64 | - | - |
| 500 | 64 | 65 | 57 | 71 | - | - |
| 600 | 70 | 70 | 61 | $\overline{74}$ | 74 | 73 |
| 700 | $\overline{72}$ | $\overline{73}$ | 64 | $\overline{75}$ | - | - |

Die Oberflächenhärte der erfindungsgemäßen Beispielserie 1 und 2 liegt bei allen Rohdichten deutlich über der des Zeolith-freien Vergleichsbeispiels (3). Sie liegt nur wenig unter der Oberflächenhärte des Wasserfrei mit R 11 als Treibmittel hergestellten Integralschaums (Vergleichsbeispiel 4). Auch dit mit $CO_2$/Baylith W erreichte Oberflächenhärte (Beispiele 5) und 6) ist deutlich über den Werten des Vergleichsbeispiels 3). Man sieht, daß dabei keine Rolle spielt, ob Wasser oder Kohlendioxid in Form von Addukten an Baylit W eingesetzt werden, oder ob das wasserfreie Baylith W erst in der Poliolmischung mit den jeweiligen Mengen Wasser bzw. Kohlendioxid beladen wird.


**Ansprüche**

1. Verfahren zur Herstellung von Fluorkohlenwasserstoff-freien, harten Polyurethanschaumstoff-Formteilen einer Rohdichte von mindestens 300 kg/m³ durch Formverschäumung eines Reaktionsgemisches aus
a) einer Polyisocyanatkomponente, bestehend aus mindestens einem aromatischen Polyisocyanat,
b) einer Polyhydroxyl-Komponente,
c) Treibmitteln,
d) Katalysatoren und
e) weiteren Hilfs- und Zusaztamitteln
unter Einhaltung einer Isocyanatkennzahl von 75 bis 150, dadurch gekennzeichnet, daß man
b) als Polyhydroxyl-Komponente eine organische Polyhydroxylverbindung oder ein Gemisch organischer Polyhydroxylverbindungen mit einer (mittleren) Hydroxylfunktionalität von mindestens 2,2 und einer (mittleren) Hydroxylzahl von mindestens 300 mg KOH/g,
c) als Treibmittel Wasser und/oder Kohlendioxid und
e) als Zusatzmittel zeolithische Absorbentien mit einem Durchmesser der Porenöffnung zu den Absorptionshohlräumen von mindestens 0,7 mm, gegebenenfalls neben weiteren Hilfs- und Zusatzmitteln
verwendet.

2. Verfahren gemäß Anspruch 1, dadurch gekennzeichnet, daß man als Treibmittel ausschließlich Wasser verwendet, wobei die in das Reaktionsgemisch eingebrachte Wassermenge, inklusive dem am zeolithischen Absorbens gebundenen Wasser, bei mindestens 0,5 Gew.-%, bezogen auf das Gewicht der Komponente b), liegt.